# EUROPEAN PATENT APPLICATION

(11) **EP 4 628 336 A1**
(43) Date of publication of application: **08.10.2025**
(21) Application number: 24168287.1
(22) Date of filing: 03.04.2024
(51) Int. Cl.: B60K 1/04

(54) **ENERGY STORAGE ARRANGEMENT WITH INDIVIDUALLY SUSPENDABLE ENERGY STORAGE MODULES**

(71) Applicant: VOLVO TRUCK CORPORATION, 405 08 Göteborg (SE)
(72) Inventor: LANDVIK, Sondre, 417 61 GÖTEBORG (SE)
(74) Representative: Kransell & Wennborg KB

(57) **Abstract**

The present disclosure relates to an energy storage arrangement for a vehicle, the energy storage arrangement comprising: a first energy storage module (10) comprising a first surface (19) and a second surface (13), the first and second surfaces being arranged transversally offset from each other, and a first frame connecting member (15) arranged on the first surface, a second energy storage module (30) comprising a first surface (39) and a second surface (33), the first and second surfaces being arranged transversally offset from each other, and a first frame connecting member (35) arranged on the first surface, wherein the first and second energy storage modules are arranged side by side with each other forming a geometric gap (90) in a longitudinal direction, and a protection plate (50) extending across the geometric gap and being connected to the second surface of the first energy storage module and to the second surface of the second energy storage module, wherein the first and second energy storage modules are individually suspendable to a frame arrangement (110) of the vehicle by the respective first frame connecting members.

## Description

### TECHNICAL FIELD

The disclosure relates generally to energy storage arrangements. In particular aspects, the disclosure relates to an energy storage arrangement with individually suspendable energy storage module. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

For heavy duty vehicles, the energy storage arrangements, often in the form of traction batteries, need to be relatively large in size to be able to contain a sufficient level of energy such that the vehicle can be operated at an acceptable range using the electric traction motors. The large energy storage arrangements are in turn of substantial weight, and there is a challenged to position and assemble these energy storage systems to the frame of the heavy duty vehicle.

### SUMMARY

According to a first aspect of the disclosure, there is provided an energy storage arrangement for a vehicle, the energy storage arrangement comprising: a first energy storage module comprising a first surface and a second surface, the first and second surfaces being arranged transversally offset from each other, and a first frame connecting member arranged on the first surface, a second energy storage module comprising a first surface and a second surface, the first and second surfaces being arranged transversally offset from each other, and a first frame connecting member arranged on the first surface, wherein the first and second energy storage modules are arranged side by side with each other forming a geometric gap in a longitudinal direction, and a protection plate extending across the geometric gap and being connected to the second surface of the first energy storage module and to the second surface of the second energy storage module, wherein the first and second energy storage modules are individually suspendable to a frame arrangement of the vehicle by the respective first frame connecting members.

The first aspect of the disclosure may seek to at least partly mitigate the problem of difficult and non-secure connection of two or more energy storage modules to a frame arrangement of the vehicle, as well as to further provide facilitated disconnection of one more of the energy storage modules of the energy storage arrangement upon service. A technical benefit may include that an energy storage arrangement with a first and a second energy storage module is provided with respective first frame connecting members that enable for a secure and efficient individual suspension of the energy storage arrangement to the frame arrangement. In addition, the first and second energy storage modules are securely connected to each other by the protection plate to form of a uniform energy storage arrangement which is provided with sufficient rigidity. Also, by providing for an individual suspension of the first and second energy storage module to the frame arrangement, twist motions of the frame arrangement may not be transmitted into the energy storage arrangement. The individual suspension may also simplify for removal of e.g. the first energy storage module without having to remove the second energy storage module from the frame arrangement. This may be particularly advantageously during maintenance. As will be evident from the below described third aspect, the present disclosure enables for a simple and safe assembly of the energy storage arrangement.

The above described energy storage arrangement thus comprises a first and a second energy storage module which are individually suspendable to the frame arrangement. The first and second energy storage modules are thus configured to be individually suspended to the frame arrangement by their respective first frame connecting member. Accordingly, the first energy storage module is configured to be suspended to the frame arrangement without any load bearing structure between the first and second energy storage modules. In particular, the first energy storage module may comprise a transverse side surface facing a transverse side surface of the second energy storage module, i.e. the geometric gap is arranged between the transverse side surfaces. The energy storage arrangement may thus advantageously be void of any load bearing structure between the transverse side surfaces of the first and second energy storage modules.

Optionally in some examples, including in at least one preferred example, the first energy storage module comprises a third surface, and a second frame connecting member arranged on the third surface, the first and third surfaces face each other, wherein the first energy storage module is suspendable to the frame arrangement by the second frame connecting member. A technical benefit may include that the first energy storage module is provided with yet another frame connecting member, whereby the first energy storage module may be suspended to the frame arrangement in a more safe and rigid manner.

Optionally in some examples, including in at least one preferred example, the second energy storage module comprises a third surface, and a second frame connecting member arranged on the third surface, the first and third surfaces of the second energy storage module face each other, wherein the second energy storage module is suspendable to the frame arrangement by the second frame connecting member. A technical benefit may include that the second energy storage module is provided with yet another frame connecting member, whereby the second energy storage module may be suspended to the frame arrangement in a more safe and rigid manner.

Optionally in some examples, including in at least one preferred example, the first energy storage module comprises a fourth surface arranged transversally offset from the third surface, and the second energy storage module comprises a fourth surface arranged transversally offset from the third surface, wherein the energy storage arrangement further comprises a second protection plate connected to the fourth surface of the first energy storage module and to the fourth surface of the second energy storage module. A technical benefit may include that a protection plate is positioned at each transversal outer position of the energy storage arrangement. In addition, the second protection plate may serve the same benefits described above in relation to the first protection plate.

Optionally in some examples, including in at least one preferred example, the first energy storage module is a single and uniform first unit suspendable to the frame arrangement by its first and second frame connecting members. A technical benefit may include that the complete first energy storage module can be suspended to the frame arrangement a one single unit, whereby the number of assembly steps can be reduced.

Optionally in some examples, including in at least one preferred example, the second energy storage module is a single and uniform second unit suspendable to the frame arrangement by its first and second frame connecting members. In a similar vein as described above, a technical benefit may include that the second energy storage module can be suspended to the frame arrangement a one single unit, whereby the number of assembly steps can be reduced.

Optionally in some examples, including in at least one preferred example, the first energy storage module comprises two separately arranged first energy storage modules, the first and second surfaces being arranged on a first one of the two first energy storage modules, and the third surface being arranged on a second one of the two first energy storage modules. A technical benefit may include that two separately arranged first energy storage modules are less heavy compared to a single unit, thus being more convenient to assemble.

Optionally in some examples, including in at least one preferred example, the energy storage arrangement further comprises at least one first rod, the first rod connecting the two separately arranged first energy storage modules to each other. A technical benefit may include that an efficient and secure connection between the two separately arranged first energy storage modules.

Optionally in some examples, including in at least one preferred example, the at least one first rod is arranged in the two first energy storage modules in a transversal direction. A technical benefit may include that the connection of the two separately arranged first energy modules can be made by the at least one rod from a transversally outer position. Hence, it may be relatively easy to connect the at least one rod.

Optionally in some examples, including in at least one preferred example, the second energy storage module comprises two separately arranged second energy storage modules suspendable to the frame arrangement, wherein the first and second surfaces are arranged on a first one of the two second energy storage modules. In a similar vein as described above, a technical benefit may include that two separately arranged second energy storage modules are less heavy compared to a single unit, thus being more convenient to assemble. The second one of the two energy storage modules may comprise the above-mentioned third and a fourth surfaces.

Optionally in some examples, including in at least one preferred example, the energy storage arrangement further comprises at least one second rod, the second rod connecting the two separately arranged second energy storage modules to each other. A technical benefit may include that an efficient and secure connection between the two separately arranged second energy storage modules.

Optionally in some examples, including in at least one preferred example, the at least one second rod is arranged in the two second energy storage modules in a transversal direction. A technical benefit may include that the connection of the two separately arranged first energy modules can be made by the at least one rod from a transversally outer position. Hence, it may be relatively easy to connect the at least one rod.

Optionally in some examples, including in at least one preferred example, a cross-section in a transversal direction of at least one of the first and second energy storage modules is arranged in a U-shape.

Optionally in some examples, including in at least one preferred example, a cross-section in a transversal direction of at least one of the first and second energy storage modules is arranged in a rectangular shape.

Optionally in some examples, including in at least one preferred example, the energy storage arrangement further comprises a third energy storage module comprising a first and a second surface, the first and second surfaces being arranged transversally offset from each other, and a first frame connecting member arranged on the first surface, wherein the third energy storage module is arranged side by side with the second energy storage module forming a second geometric gap in the longitudinal direction, and a third protection plate extending across the second geometric gap and connected to the second and third energy storage modules.

A technical benefit may include that the available energy for an electric traction motor can be increased, thus increasing the operational range capacity for the electric traction motor. Also, a technical benefit of using a third protection plate connected to the second and third energy storage modules may be that solely the third protection plate must be removed when there is a need for maintenance of the third energy storage module. Hence, the first protection plate must not be removed when there is a desire to disassemble the third energy storage module from the energy storage arrangement.

It should however be readily understood that a single protection plate may be connected to the first, second and third energy storage modules. A technical benefit may include that the structural stiffness of the energy storage arrangement may be increased and less structural components are needed.

Optionally in some examples, including in at least one preferred example, the third energy storage module is individually suspendable to the frame arrangement of the vehicle. Technical benefits may correspond to those described above in relation to the individual suspension of the first and second energy storage modules.

Optionally in some examples, including in at least one preferred example, the third energy storage module comprises a third surface, and a second frame connecting member arranged on the third surface, the first and third surfaces of the third energy storage module face each other, wherein the third energy storage module is suspendable to the frame arrangement by the second frame connecting member. Technical benefits may correspond to those described above in relation to the second frame connecting member of the first and second energy storage modules.

According to a second aspect, there is provided a vehicle, comprising a frame arrangement and an energy storage arrangement according to any one of the examples described above in relation to the first aspect.

Optionally in some examples, including in at least one preferred example, the frame arrangement comprises a first energy storage module connecting member, the first energy storage module being suspended to the vehicle frame arrangement by connecting the frame connecting member of the first energy storage module to the first energy storage module connecting member.

Optionally in some examples, including in at least one preferred example, the frame arrangement comprises a pair of longitudinally extending frame members.

According to a third aspect, there is provided a method of assembling an energy storage arrangement to a frame arrangement of a vehicle, the method comprising: connecting a first energy storage module to the frame arrangement by suspending a first frame connecting member of the first energy storage module to a first energy storage module connecting member of the frame arrangement, the first frame connecting member being arranged on a first surface of the first energy storage module, connecting a second energy storage module to the frame arrangement side by side with the first energy storage module to form a geometric gap in a longitudinal direction, the second energy storage module is connected to the frame arrangement by suspending a first frame connecting member of the second energy storage module to a second energy storage module connecting member of the frame arrangement, the first frame connecting member being arranged on a first surface of the second energy storage module, and connecting a protection plate to a respective second surface of the first and second energy storage module across the geometric gap, the second surfaces being transversally offset to the corresponding first surface.

As indicated above, a technical benefit may include that simple and efficient assembling of the energy storage arrangement to the frame arrangement of the vehicle may be provided.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary vehicle according to an example,
Fig. 2 is an exemplary energy storage arrangement according to an example, wherein the exemplary energy storage arrangement is connected to a frame arrangement of a vehicle,
Fig. 3 is an exemplary energy storage arrangement according to Fig. 2 wherein one of the energy storage modules is disconnected from the frame arrangement,
Fig. 4 is an exemplary energy storage arrangement according to an example, and
Fig. 5 is an exemplary flow chart of a method of assembling an energy storage arrangement according to an example.

### DETAILED DESCRIPTION

The detailed description set forth below provides information and examples of the disclosed technology with sufficient detail to enable those skilled in the art to practice the disclosure.

The following disclosure aims at minimizing the problem of difficult and non-secure connection of two or more energy storage modules to a frame arrangement of the vehicle, as well as to further provide facilitated disconnection of one more of the energy storage modules of the energy storage arrangement upon service. In addition, the disclosure also aims at providing an energy storage arrangement where a reduction of tensions and stresses, caused by frame twisting, is transmitted to the energy storage arrangement.

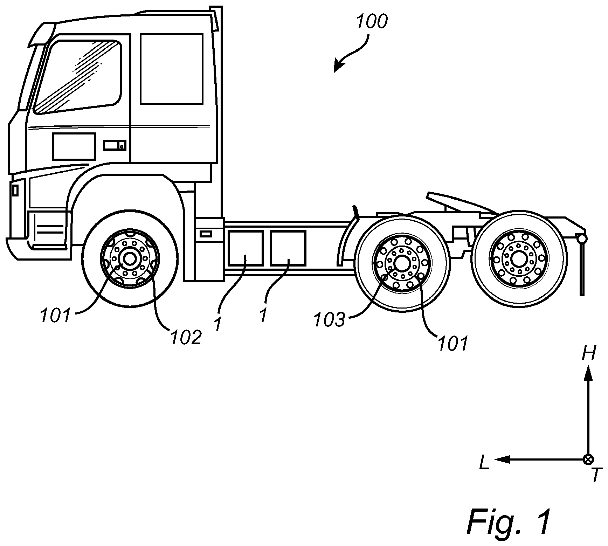

Turning to Fig. 1, which is an exemplary illustration of a vehicle 100 according to an example. The exemplified vehicle 100 is configured to be at least partly propelled by one or more electric traction motors 101. In Fig. 1, the electric traction motors 101 are exemplified as wheel hub motors connected to the pair of front wheels 102 as well as to the foremost pair of rear wheels 103. However, the vehicle 100 may alternatively comprises a single electric traction motor connected to the wheels via a conventional propulsion shaft (not shown). The at least one electric traction motor 101 is configured to apply a propulsive power to the wheels of the vehicle during propulsion, and to generate electric power during braking.

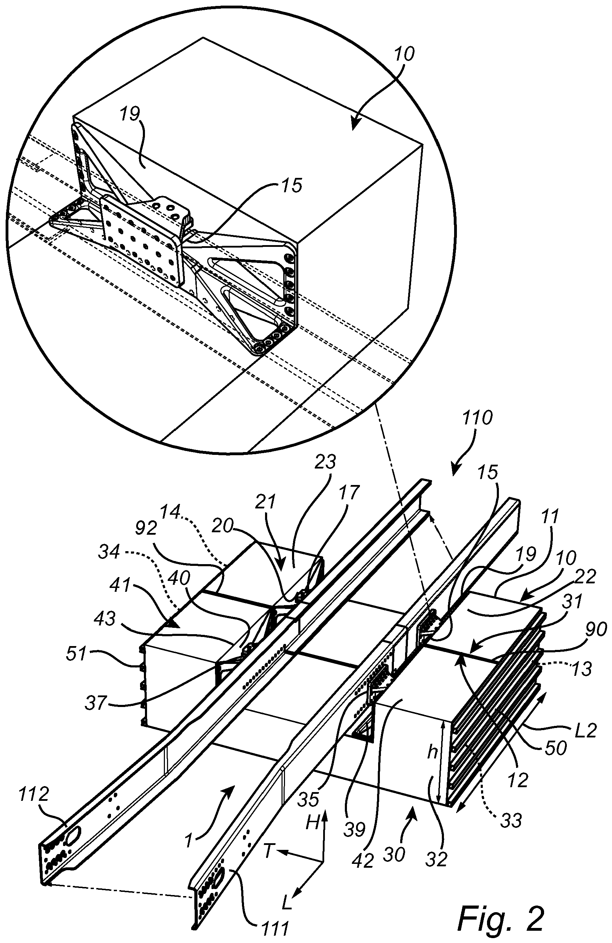

The vehicle 100 further comprises an energy storage arrangement 1, which may also be referred to as a high-voltage vehicle battery. The energy storage arrangement 1 is configured to feed electric power to the electric traction motor 101 during propulsion of the vehicle 100 and to receive electric power during braking. In order to describe the connection of the energy storage arrangement 1 to the frame of the vehicle 100, reference is now made to Fig. 2.

Fig. 2 is an exemplary energy storage arrangement according to an example, wherein the exemplary energy storage arrangement is connected to a frame arrangement of a vehicle. In particular, Fig. 2 depicts a view of the energy storage arrangement 1 comprising a first and a second energy storage module 10,30. The energy storage arrangement 1 extends in a longitudinal direction L, a transverse direction T and a height direction H when connected to the frame arrangement 110, whereby the first and second energy storage modules 10,30 are arranged side by side, as seen in the longitudinal direction L. In further detail, the first and second energy storage modules 10,30 are arranged side by side whereby a geometric gap 90 is formed between the first and second energy storage modules 10,30 in the longitudinal direction L.

In Fig. 2, the first and second energy storage modules are connected to a frame arrangement 110 of the vehicle 100 according to an example. The exemplified frame arrangement 110 comprises a pair of longitudinal frame members 111, 112. Put it differently, the frame 110 comprises a first frame member 111 and a second frame member 112, wherein each of the first 111 and second 112 frame members extends in the longitudinal direction L, i.e. the longitudinal direction of the vehicle 100.

In the example depicted in Fig. 2, the first energy storage module 10 comprises a first transverse side 11, a second transverse side 12, a first and second longitudinal sides extending between the first and second transverse sides. The first energy storage module 10 is provided with a first frame connecting member 15. The first frame connecting member 15 is arranged on a first surface 19 of the first energy storage module. The exemplified first energy storage module 10 also comprises a second frame connecting member 17 arranged on a third surface 20 of the first energy storage module 10. The first surface 19 and the third surface 20 of the first energy storage module 10 face each other. As can be seen in the example of Fig. 2, when the first energy storage module is connected to the frame arrangement, the first 19 and third 20 surfaces are arranged on opposite sides of the frame arrangement as seen in the transversal direction T. The first energy storage module 10 is in Fig. 2 exemplified as a single and uniform first unit suspendable to the frame arrangement 110 by the first 15 and second 17 frame connecting members. In detail, the first energy storage module 10 may be arranged as a single and common housing 21.

In an assembled position, the first frame connecting member 15 arranged on the first surface 19 of the first energy storage module 10 is connected to the first frame member 111 and the second frame connecting member 17 arranged on the third surface 20 of the first energy storage module 10 is connected to the second frame member 112.

In a similar vein as the first energy storage module, also the second energy storage module 30 comprises a first transverse side 31, a second transverse side 32, a first longitudinal side and a second longitudinal side, the first and second longitudinal sides extending between the first and second transverse sides 31,32. The second energy storage module 30 further comprises a first frame connecting member 35. The first frame connecting member 35 of the second energy storage module 30 is arranged on a first surface 39 of the second energy storage module. The exemplified second energy storage module 30 also comprises a second frame connecting member 37 arranged on a third surface 40 of the second energy storage module 30. The first surface 39 and the third surface 40 of the second energy storage module 30 face each other. As can be seen in the example of Fig. 2, when the second energy storage module is connected to the frame arrangement, the first 39 and third 40 surfaces are arranged on opposite sides of the frame arrangement as seen in the transversal direction T. The second energy storage module 30 is in Fig. 2 exemplified as a single and uniform first unit suspendable to the frame arrangement 110 by the first 35 and second 37 frame connecting members. In detail, the second energy storage module 30 may be arranged as a single and common housing 41.

In an assembled position, the first frame connecting member 35 arranged on the first surface 39 of the second energy storage module 30 is connected to the first frame member 111 and the second frame connecting member 37 arranged on the third surface 40 of the second energy storage module 30 is connected to the second frame member 112.

The energy storage arrangement 1 furthermore comprises a protection plate 50. The protection plate 50 is connected to a second surface 13 of the first energy storage module 10 as well as connected to a second surface 33 of the second energy storage module 30. The first 19 and second 13 surfaces of the first energy storage module 10 are arranged transversally offset from each other. According to an example, the first 19 and second 13 surfaces of the first energy storage module 10 are parallel with each other. In a similar vein, the first 39 and second 33 surfaces of the second energy storage module 30 are arranged transversally offset from each other. According to an example, the first 39 and second 33 surfaces of the second energy storage module 30 are parallel with each other. The protection plate 50 thus extends over the geometric gap 90 and is mechanically attached to the respective second surfaces 13,33 of the first and second energy storage modules 10,30.

Furthermore, the exemplified energy storage arrangement comprises a second protection plate 51. The above described protection plate indicated with reference numeral 50 may thus in the following also be referred to as a first protection plate 50. The second protection plate 51 is connected to a fourth surface 14 of the first energy storage module 10 as well as to a fourth surface 34 of the second energy storage module 30. The third 20 and fourth 14 surfaces of the first energy storage module 10 are arranged transversally offset from each other. In a similar vein, the first 39 and second 33 surfaces of the second energy storage module 30 are arranged transversally offset from each other. Also, the third 20 and fourth 14 of the first energy storage module 10 are arranged on transversally opposite sides of the frame arrangement compared to the first 19 and second 13 surfaces. In a similar vein, the third 40 and fourth 34 of the second energy storage module 30 are arranged on transversally opposite sides of the frame arrangement compared to the first 39 and second 33 surfaces. The second protection plate 51 thus extends over a second geometric gap 92 and is mechanically attached to the respective second surfaces 13,33 of the first and second energy storage modules 10,30.

The first 10 and second 30 energy storage modules are individually suspended to the frame arrangement 110. In particular, the energy storage arrangement 1 is void of any load bearing structure between the second transverse side 12 of the first energy storage module 10 and the first transverse side 31 of the second energy storage module 30. Hereby, when the protection plate 50 and the second protection plate 52 are connected to the first 10 and second 30 energy storage modules, these protection plates may be the sole mechanical connection between the first 10 and second 30 energy storage modules.

The first protection plate 50 may extend, as seen in the longitudinal direction L, over at least 40% of the combined extension of the second surfaces 13,33 of the first and second energy storage modules 10,30 and the second protection plate 51 may extend, as seen in the longitudinal direction L, over at least 40% of the combined extension of the fourth surfaces 14,34 of the first and second energy storage modules 10,30.

Optionally the first protection plate 50 may extend, as seen in the longitudinal direction L, over at least 80% of the combined extension of the second surfaces 13,33 of the first and second energy storage modules 10,30 and the second protection plate 51 may extend, as seen in the longitudinal direction L, over at least 80% of the combined extension of the fourth surfaces 14,34 of the first and second energy storage modules 10,30.

Alternatively, the first protection plate 50 may extend, as seen in the longitudinal direction L, over 100% of the combined extension (L2) of the second surfaces 13,33 of the first and second energy storage modules 10,30 and the second protection plate 51 may extend, as seen in the longitudinal direction L, over 100% of the combined extension of the fourth surfaces 14,34 of the first and second energy storage modules 10,30.

Furthermore, the first and/or second protection plate 50,51 extend(s) over at least 80% of a height (h) of the second surfaces 13,33 of the first and second energy storage modules. Optionally, the first and/or second protection plate 50, 51 may extend above an upper end of the second surfaces 13,33 of the first and second energy storage modules.

The first and second protection plates 50,51 may be metal protection plates, such as steel protection plates.

The first energy storage module 10 shown in Fig. 2 comprises a plurality of battery packs (not shown) stacked in the common housing 21, and the second energy storage module 30 comprises a plurality of battery packs (not shown) stacked in the housing 41. The first frame connecting member 15, 35 of the respective first and second energy storage module 10,30 is provided on a first end portion 22,42 of the respective first and second housing and the second frame connecting member of the respective first and second energy storage module being provided on a second end portion 23,43 of the respective first and second housing. Accordingly, the first 22,42 and second 23,43 end portions forms part of the respective first and third surfaces of the first and second energy storage module. In the example in Fig. 2, the first, second, third and fourth surfaces described above form part of the corresponding common housing 21, 41. In Fig. 2, the respective common housings 21,41 each has a cross-section profile, as taken in the transverse direction T of the first and the second energy storage module, in the form of a U-shape or modified U-shape. By modified U-shape is meant that the longitudinal sides are joined to the transverse sides with square corner portion. The housings may alternatively have a rectangular shape.

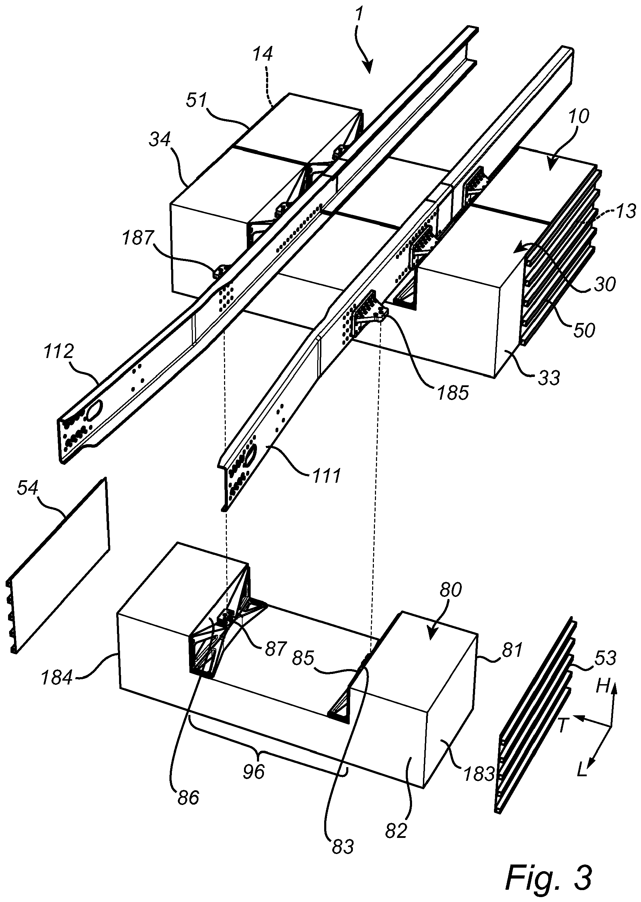

Turning to Fig. 3 which is an exemplary energy storage arrangement according to Fig. 2 wherein one of the energy storage modules is disconnected from the frame arrangement. In Fig. 3 the energy storage arrangement 1 comprises, in addition to the first 10 and second 30 energy storage module illustrated in Fig. 2, a third energy storage module 80. The third energy storage module 80 comprises a first transverse side 81, a second transverse side 82, and a first and second longitudinal sides extending between the first and second transverse sides 81,82. The third energy storage module 80 furthermore comprises a first frame connecting member 85 arranged on a first surface 83 of the third energy storage module 80 and a second frame connecting member 87 arranged on second surface 86 of the third energy storage module 80. The first surface and the second surface are opposing surfaces of the third energy storage module 80, as seen in the transverse direction (T) of the energy storage arrangement, and are arranged on opposing sides of a central portion 96.

The first frame connecting member 85 of the third energy storage module 80 is arranged to connect to an energy storage module connecting member 185 provided on the first frame member 111. The second frame connecting member 87 of the third energy storage module 80 is arranged to connect to an energy storage module connecting member 187 provided on the second frame member 112. The third energy storage module 80 also comprises a third surface 183 and a fourth surface 184 which are arranged in the same manner as the third and fourth surfaces of the first 10 and second 30 energy storage modules.

It should thus be understood that the frame arrangement comprises corresponding energy storage module connecting members configured to connect to the respective first and second frame connecting members of the first and second energy storage modules for suspending the first and second energy storage modules to the frame arrangement.

When the third energy storage module 80 is connected to the frame arrangement 110, the third energy storage module 80 is arranged side-by-side with the second energy storage module 30, as seen in the longitudinal direction L. A geometric gap in the longitudinal direction is present between the second 30 and third 80 energy storage modules. The third energy storage module 80 is also individually suspended to the frame arrangement in a similar manner as described above for the first 10 and second 30 energy storage modules. The energy storage arrangement 1 comprises the above described first 50 and second 51 protection plates extending over and being mechanically attached to the first and second energy storage module. The energy storage arrangement 1 depicted in Fig. 3 also comprises a third protection plate 53 extending over and being mechanically attached to the second surface 33 of the second 30 energy storage module and to the second surface 183 of the third energy storage module 80. The energy storage arrangement 1 also comprises a fourth protection plate 54 extending over and being mechanically attached to the fourth surface 34 of the second energy storage module 30 and to the fourth surface 184 of the third energy storage module 80.

In an alternative example, the first protection plate may extend over and be mechanically attached to each of the first 10, second 30 and third 80 energy storage modules. In a similar vein, the second protection plate may extend over and be mechanically attached to each of the first 10, second 30 and third 80 energy storage modules.

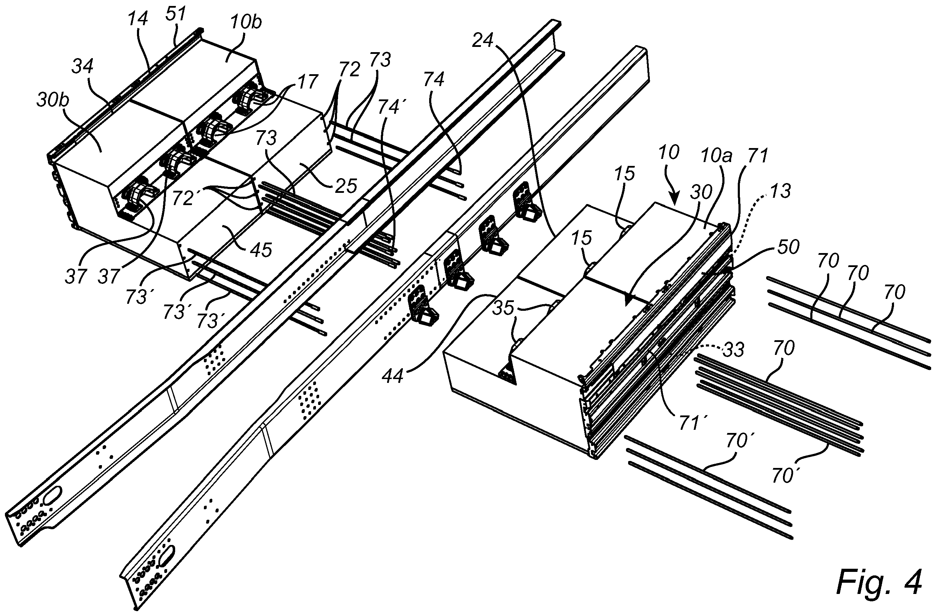

Reference is now made to Fig. 4 which illustrates an example wherein the first energy storage module comprises two separately arranged first energy storage modules 10a, 10b, in the following referred to as a first and a second submodule 10a, 10b of the first energy storage module, and the second energy storage module comprises two separately arranged second energy storage modules 30a, 30b, in the following referred to as a first and a second submodule 30a, 30b of the second energy storage module. The first submodule 10a of the first energy storage module 10 is mechanically connected to the second submodule 10b of the first energy storage module 10 and the first submodule 30a of the second energy storage module 30 is mechanically connected to the second submodule 30b of the second energy storage module 30. The first and second submodules 10a, 10b, 30a, 30b are mechanically connected to each other at a respective longitudinal connecting side 24,25,44,45 of the submodules 10a, 10b, 30a, 30b thereby forming one respective mechanically connected unit and wherein the first submodules 10a, 30a of the first and second energy storage modules 10, 30 comprises the first frame connecting members 15,35, and the second submodules 10b,30b of the first and second energy storage modules 10,30 comprising the second frame connecting members 17,37.

Thus, in an assembled position, i.e. mounted position, the first submodule 10a of the first energy storage module 10 is connected to the first frame member 111 and the second submodule 10b of the first energy storage module 10 is connected to the second frame member 112. Similarly, and in an assembled/mounted position, the first submodule 30a of the second energy storage module 30 is connected to the first frame member 111 and the second submodule 30b of the second energy storage module 30 is connected to the second frame member 112.

In the example of Fig. 4, the energy storage arrangement comprises a first rod 70,70' arranged in a respective first through hole 71,71' of the first submodules 10a,30a. The first rod 70,70' extends between the second surface 13,33 and the longitudinal connecting side 24,44 of the respective first submodules 10a, 30a, and further directed into a respective second through hole 72,72' extending from the respective longitudinal connecting side of the second submodules 10b, 30b of the first and second energy storage modules 10, 30.

In the exemplary energy storage arrangement illustrated in Fig. 4, a second rod 73, 73' is arranged in the respective second through hole 72, 72' of the second submodules 10b, 30b of the first and second energy storage modules 10, 30. The second rod 73, 73' extends between the fourth surface 14,34 and the longitudinal connecting side 25, 45 of the respective second submodule 10b, 30b. The first and second energy storage modules 10,30 also comprises a respective sleeve 74, 74' arranged in the respective second through hole 72, 72' of the second submodules 10b, 30b of the respective first and second energy storage modules 10, 30. The sleeve 74,74' is arranged through the respective longitudinal connecting side of the second submodules 10b, 30b and through the respective longitudinal connecting side 24, 44 of the first submodules 10a,30a and are connected to the first 70, 70' and second 73, 73' rods when the first and second submodules are assembled.

As shown in Fig. 4, the first and second rods may be a respective first and second sets of rods, similarly, the first and second through holes and the sleeve, may be a set of first through holes, a set of second through holes and a set of sleeves.

The energy storage arrangement 1 depicted in Fig. 4 also comprises a first protection plate 50 extending over and being mechanically attached to the respective second surface 13, 33 of the first and second energy storage modules 10, 30. The energy storage arrangement also comprises a second protection plate 51 extending over and being mechanically attached to the respective fourth surface 14, 34 of the first and the second energy storage modules 10,30. In a similar vein as described above for the examples depicted in Figs 2 and 3, the first and second energy storage modules are individually suspended to the frame arrangement. The protection plates 50,51 are the only mechanical connection between the first and the second energy storage modules 10,30.

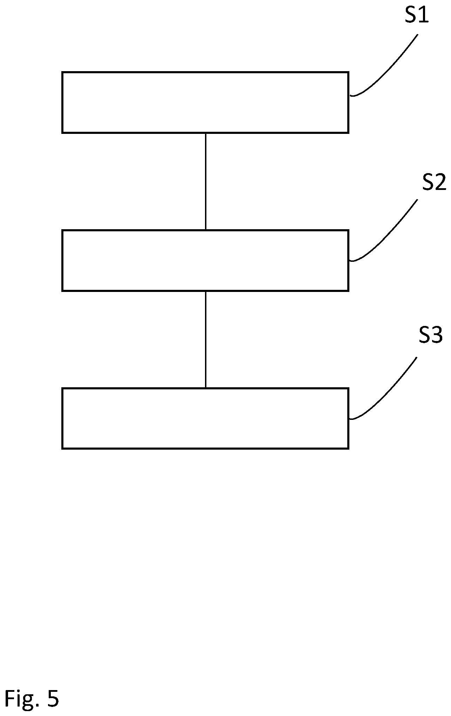

Reference is now made to Fig. 5 which is an exemplary flow chart of a method of assembling an energy storage arrangement according to an example. When connecting the above described energy storage arrangement 1 to the frame arrangement, the first energy storage module is connected S1 to the frame arrangement. In particular, the first energy storage module is connected to the frame arrangement by suspending the first frame connecting member of the first energy storage module to the first energy storage module connecting member of the frame arrangement. The first frame connecting member is arranged on a first surface of the first energy storage module.

In a somewhat similar manner, the second energy storage module is connected S2 to the frame arrangement. The second energy storage module is connected side by side with the first energy storage module to form a geometric gap in a longitudinal direction between the first and second energy storage modules. The second energy storage module is connected to the frame arrangement by suspending the first frame connecting member of the second energy storage module to the second energy storage module connecting member of the frame arrangement. Also, the first frame connecting member is arranged on a first surface of the second energy storage module.

A protection plate is connected S3 to a respective second surface of the first and second energy storage module. The protection plate extends across the above described geometric gap. The second surfaces should be construed as being, which is also described above, arranged transversally offset to the corresponding first surface.

### EXAMPLE LIST

Example 1. An energy storage arrangement for a vehicle, the energy storage arrangement comprising: a first energy storage module comprising a first surface and a second surface, the first and second surfaces being arranged transversally offset from each other, and a first frame connecting member arranged on the first surface, a second energy storage module comprising a first surface and a second surface, the first and second surfaces being arranged transversally offset from each other, and a first frame connecting member arranged on the first surface, wherein the first and second energy storage modules are arranged side by side with each other forming a geometric gap in a longitudinal direction, and a protection plate extending across the geometric gap and being connected to the second surface of the first energy storage module and to the second surface of the second energy storage module, wherein the first and second energy storage modules are individually suspendable to a frame arrangement of the vehicle by the respective first frame connecting members.

Example 2. The energy storage arrangement of example 1, wherein the first energy storage module comprises a third surface, and a second frame connecting member arranged on the third surface, the first and third surfaces face each other, wherein the first energy storage module is suspendable to the frame arrangement by the second frame connecting member.

Example 3. The energy storage arrangement of any one of examples 1 or 2, wherein the second energy storage module comprises a third surface, and a second frame connecting member arranged on the third surface, the first and third surfaces of the second energy storage module face each other, wherein the second energy storage module is suspendable to the frame arrangement by the second frame connecting member.

Example 4. The energy storage arrangement of examples 2 and 3, wherein the first energy storage module comprises a fourth surface arranged transversally offset from the third surface, and the second energy storage module comprises a fourth surface arranged transversally offset from the third surface, wherein the energy storage arrangement further comprises a second protection plate connected to the fourth surface of the first energy storage module and to the fourth surface of the second energy storage module.

Example 5. The energy storage arrangement of any one of examples 2-4, wherein the first energy storage module is a single and uniform first unit suspendable to the frame arrangement by its first and second frame connecting members.

Example 6. The energy storage arrangement of any one of examples 2-5, wherein the second energy storage module is a single and uniform second unit suspendable to the frame arrangement by its first and second frame connecting members.

Example 7. The energy storage arrangement of any one of examples 2 - 4 wherein the first energy storage module comprises two separately arranged first energy storage modules, the first and second surfaces being arranged on a first one of the two first energy storage modules, and the third surface being arranged on a second one of the two first energy storage modules.

Example 8. The energy storage arrangement of example 7, further comprising at least one first rod, the first rod connecting the two separately arranged first energy storage modules to each other.

Example 9. The energy storage arrangement of example 8, wherein the at least one first rod is arranged in the two first energy storage modules in a transversal direction.

Example 10. The energy storage arrangement of any one of examples 7 - 9, wherein the second energy storage module comprises two separately arranged second energy storage modules suspendable to the frame arrangement, wherein the first and second surfaces are arranged on a first one of the two second energy storage modules.

Example 11. The energy storage arrangement of example 10, further comprising at least one second rod, the second rod connecting the two separately arranged second energy storage modules to each other.

Example 12. The energy storage arrangement of example 11, wherein the at least one second rod is arranged in the two second energy storage modules in a transversal direction.

Example 13. The energy storage arrangement of any one of the preceding examples, wherein a cross-section in a transversal direction of at least one of the first and second energy storage modules is arranged in a U-shape.

Example 14. The energy storage arrangement of any one of examples 1 - 12, wherein a cross-section in a transversal direction of at least one of the first and second energy storage modules is arranged in a rectangular shape.

Example 15. The energy storage arrangement of any one of the preceding examples, wherein the energy storage arrangement further comprises a third energy storage module comprising a first and a second surface, the first and second surfaces being arranged transversally offset from each other, and a first frame connecting member arranged on the first surface, wherein the third energy storage module is arranged side by side with the second energy storage module forming a second geometric gap in the longitudinal direction, and a third protection plate extending across the second geometric gap and connected to the second and third energy storage modules.

Example 16. The energy storage arrangement of example 15, wherein the third energy storage module is individually suspendable to the frame arrangement of the vehicle.

Example 17. The energy storage arrangement of any one of examples 15 and 16, wherein the third energy storage module comprises a third surface, and a second frame connecting member arranged on the third surface, the first and third surfaces of the third energy storage module face each other, wherein the third energy storage module is suspendable to the frame arrangement by the second frame connecting member.

Example 18. A vehicle, comprising a frame arrangement and an energy storage arrangement according to any one of the preceding examples.

Example 19. The vehicle according to example 18, wherein the frame arrangement comprises a first energy storage module connecting member, the first energy storage module being suspended to the vehicle frame arrangement by connecting the frame connecting member of the first energy storage module to the first energy storage module connecting member.

Example 20. The vehicle according to any one of examples 18 or 19, wherein the frame arrangement comprises a pair of longitudinally extending frame members.

Example 21. A method of assembling an energy storage arrangement to a frame arrangement of a vehicle, the method comprising: connecting a first energy storage module to the frame arrangement by suspending a first frame connecting member of the first energy storage module to a first energy storage module connecting member of the frame arrangement, the first frame connecting member being arranged on a first surface of the first energy storage module, connecting a second energy storage module to the frame arrangement side by side with the first energy storage module to form a geometric gap in a longitudinal direction, the second energy storage module is connected to the frame arrangement by suspending a first frame connecting member of the second energy storage module to a second energy storage module connecting member of the frame arrangement, the first frame connecting member being arranged on a first surface of the second energy storage module, and connecting a protection plate to a respective second surface of the first and second energy storage module across the geometric gap, the second surfaces being transversally offset to the corresponding first surface.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An energy storage arrangement (1) for a vehicle (100), the energy storage arrangement comprising:
- a first energy storage module (10) comprising a first surface (19) and a second surface (13), the first and second surfaces being arranged transversally (T) offset from each other, and a first frame connecting member (15) arranged on the first surface,
- a second energy storage module (30) comprising a first surface (39) and a second surface (33), the first and second surfaces being arranged transversally offset from each other, and a first frame connecting member (35) arranged on the first surface, wherein the first and second energy storage modules are arranged side by side with each other forming a geometric gap in a longitudinal direction, and
- a protection plate (50) extending across the geometric gap and being connected to the second surface (13) of the first energy storage module (10) and to the second surface (33) of the second energy storage module (30),
wherein the first (10) and second (30) energy storage modules are individually suspendable to a frame arrangement (110) of the vehicle by the respective first frame connecting members.

2. The energy storage arrangement (1) of claim 1, wherein the first energy storage module (10) comprises a third surface (20), and a second frame connecting member (17) arranged on the third surface, the first and third surfaces face each other, wherein the first energy storage module is suspendable to the frame arrangement by the second frame connecting member.

3. The energy storage arrangement (1) of any one of claims 1 or 2, wherein the second energy storage module (30) comprises a third surface (40), and a second frame connecting member (37) arranged on the third surface, the first and third surfaces of the second energy storage module face each other, wherein the second energy storage module is suspendable to the frame arrangement by the second frame connecting member.

4. The energy storage arrangement (1) of claims 2 and 3, wherein the first energy storage module comprises a fourth surface (14) arranged transversally offset from the third surface, and the second energy storage module comprises a fourth surface (34) arranged transversally offset from the third surface, wherein the energy storage arrangement further comprises a second protection plate (51) connected to the fourth surface of the first energy storage module and to the fourth surface of the second energy storage module.

5. The energy storage arrangement (1) of any one of claims 2-4, wherein the first energy storage module is a single and uniform first unit suspendable to the frame arrangement by its first and second frame connecting members.

6. The energy storage arrangement (1) of any one of claims 2-5, wherein the second energy storage module is a single and uniform second unit suspendable to the frame arrangement by its first and second frame connecting members.

7. The energy storage arrangement (1) of any one of claims 2-4, wherein the first energy storage module comprises two separately arranged first energy storage modules (10a, 10b), the first and second surfaces being arranged on a first one of the two first energy storage modules, and the third surface being arranged on a second one of the two first energy storage modules.

8. The energy storage arrangement (1) of claim 7, further comprising at least one first rod (70, 70'), the first rod connecting the two separately arranged first energy storage modules to each other.

9. The energy storage arrangement (1) of any one of claims 7-8, wherein the second energy storage module (30) comprises two separately arranged second energy storage modules (30a, 30b) suspendable to the frame arrangement, wherein the first and second surfaces are arranged on a first one of the two second energy storage modules.

10. The energy storage arrangement (1) of claim 9, further comprising at least one second rod (73, 73'), the second rod connecting the two separately arranged second energy storage modules to each other.

11. The energy storage arrangement (1) of any one of the preceding claims, wherein the energy storage arrangement further comprises a third energy storage module (80) comprising a first (83) and a second (86) surface, the first and second surfaces being arranged transversally offset from each other, and a first frame connecting member (85) arranged on the first surface, wherein the third energy storage module is arranged side by side with the second energy storage module forming a second geometric gap (92) in the longitudinal direction, and a third protection plate (53) extending across the second geometric gap and connected to the second and third energy storage modules.

12. The energy storage arrangement according to claim 11, wherein the third energy storage module comprises a third surface (183), and a second frame connecting member arranged on the third surface, the first and third surfaces of the third energy storage module face each other, wherein the third energy storage module is suspendable to the frame arrangement by the second frame connecting member.

13. A vehicle (100), comprising a frame arrangement and an energy storage arrangement according to any one of the preceding claims.

14. The vehicle according to claim 13, wherein the frame arrangement comprises a first energy storage module connecting member, the first energy storage module being suspended to the vehicle frame arrangement by connecting the frame connecting member of the first energy storage module to the first energy storage module connecting member.

15. A method of assembling an energy storage arrangement to a frame arrangement of a vehicle, the method comprising:
- connecting (S1) a first energy storage module to the frame arrangement by suspending a first frame connecting member of the first energy storage module to a first energy storage module connecting member of the frame arrangement, the first frame connecting member being arranged on a first surface of the first energy storage module,
- connecting (S2) a second energy storage module to the frame arrangement side by side with the first energy storage module to form a geometric gap in a longitudinal direction, the second energy storage module is connected to the frame arrangement by suspending a first frame connecting member of the second energy storage module to a second energy storage module connecting member of the frame arrangement, the first frame connecting member being arranged on a first surface of the second energy storage module, and
- connecting (S3) a protection plate to a respective second surface of the first and second energy storage module across the geometric gap, the second surfaces being transversally offset to the corresponding first surface.
